# EUROPEAN PATENT APPLICATION

(11) **EP 3 486 660 A1**
(43) Date of publication of application: **22.05.2019**
(21) Application number: 18206287.7
(22) Date of filing: 14.11.2018
(51) Int. Cl.: G01P 3/488, G01P 1/04, G01P 1/02, B64D 41/00, B64F 5/60

(54) **GROUND TEST TOOL ADAPTER PLATE WITH SPEED SENSOR**

(30) Priority: 20.11.2017 US 201715818143
(71) Applicant: Hamilton Sundstrand Corporation, Charlotte, NC 28217-4578 (US)
(72) Inventor: HOPKINS, Gregory C., Caledonia, IL 61011 (US); KONICEK, Timothy Scott, Rockford, IL 61114 (US)
(74) Representative: Dehns

(57) **Abstract**

A speed sensing adapter plate is provided and includes an adapter housing (30) having a perimeter and a central portion and including a body having first and second opposite sides, mounting features (40) disposed in the perimeter to extend from the first side to the second side, a shaft (50), bearings (60) and a speed sensor (70). The shaft (50) is disposed in the central portion and includes first (51) and second (52) splines at the first and second sides, respectively, and a flange (53). The flange (53) is axially interposed between the first (51) and second (52) splines such that input rotational energy is transmittable from the first spline (51) to the second spline (52) via the flange (53). The bearings (60) are disposed to rotatably support the shaft (50) within the adapter housing (30). The speed sensor (70) is coupled to the perimeter of the adapter housing (30) and is configured to measure a rotational speed of the shaft (50) from rotational energy driven rotations of the flange (53).

The device can be used to determine the speed of the shaft driven by a ground test tool for a ram air turbine RAT.

## Description

### BACKGROUND

The following description relates to ground test tools and, more specifically, to an adapter plate with a speed sensor of a ground test tool.

Ram Air Turbine (RAT) systems of modern aircraft often require periodic on-ground testing to verify that their components will work as expected if the RAT system is needed in-flight. In these cases, the operating speed of the governor of the turbine is typically used to assess whether the components of the RAT systems are operating within established parameters.

In some aircraft, the RAT module does not have an internal speed sensor or provisions for aircraft instrumentation to process or display the RAT generator voltage frequency. Thus, such aircraft lack any hardware to measure, observe or make use of the turbine speed during a RAT system ground test. This leads to an inability to accurately perform the ground test.

### BRIEF DESCRIPTION

According to an aspect of the disclosure, a speed sensing adapter plate is provided and includes an adapter housing having a perimeter and a central portion defined within the perimeter and including a body having first and second opposite sides, mounting features disposed in the perimeter of the adapter housing to extend from the first side to the second side, a shaft, bearings and a speed sensor. The shaft is disposed in the central portion of the adapter housing and includes first and second splines at the first and second sides, respectively, and a flange. The flange is axially interposed between the first and second splines such that input rotational energy is transmittable from the first spline to the second spline via the flange. The bearings are disposed to rotatably support the shaft within the adapter housing. The speed sensor is coupled to the perimeter of the adapter housing and is configured to measure a rotational speed of the shaft from rotational energy driven rotations of the flange.

In accordance with additional or alternative embodiments, the first spline includes an output spline which protrudes from the first side and the second spline includes an input spline which is recessed from the second side.

In accordance with additional or alternative embodiments, the flange extends radially outwardly beyond the first and second splines to near an interior perimeter of the adapter housing.

In accordance with additional or alternative embodiments, the flange includes a hub and spokes extending radially outwardly from the hub.

In accordance with additional or alternative embodiments, the speed sensor includes a sensing element configured to sense proximal passages of one or more of the spokes.

In accordance with additional or alternative embodiments, the speed sensor is coupled to a display device configured to display the rotational speed of the shaft.

In accordance with additional or alternative embodiments, a wireless transceiver configured to transmit readings of the speed sensor to an external device.

According to another aspect of the disclosure, a ground test tool (GTT) adapter plate and speed sensor assembly is provided. The GTT and speed sensor assembly includes an adapter housing, mounting features disposed in the adapter housing to secure the adapter housing between a RAT system component and the GTT, a shaft including first and second splines to register with complementary splines of the RAT system component and the GTT such that rotational energy input from the GTT is transmittable to the RAT system component along the shaft, bearings disposed to rotatably support the shaft within the adapter housing and a speed sensor coupled to the adapter housing and configured to measure a rotational speed of the shaft from rotational energy driven rotations thereof.

In accordance with additional or alternative embodiments, the adapter housing includes a body having a first side abuttable with the GTT and a second side opposite the first side and abuttable with the RAT system component.

In accordance with additional or alternative embodiments, the mounting features are extendable through the adapter housing.

In accordance with additional or alternative embodiments, the first spline protrudes from a first side of the adapter housing and the second spline is recessed from a second side of the adapter housing.

In accordance with additional or alternative embodiments, the first spline includes an output spline which is registerable with a spline of the RAT system component and corresponds to a spline of the GTT and the second spline includes an input spline which is registerable with the spline of the GTT and corresponds to the spline of the RAT system component.

In accordance with additional or alternative embodiments, the shaft further includes a flange axially interposed between the first and second splines. The flange extends radially outwardly beyond the first and second splines to an interior perimeter of the adapter housing.

In accordance with additional or alternative embodiments, the flange includes a hub and spokes extending radially outwardly from the hub and the speed sensor includes a sensing element configured to sense proximal passages of one or more of the spokes.

In accordance with additional or alternative embodiments, the speed sensor is coupled to a display device configured to display the rotational speed of the shaft.

In accordance with additional or alternative embodiments, a wireless transceiver is configured to transmit readings of the speed sensor to an external device.

In accordance with additional or alternative embodiments, the GTT is controllable by other associated equipment in accordance with speed sensor readings.

According to yet another aspect of the disclosure, a method of conducting a ground test of a RAT system is provided. The method includes securing an adapter plate between a ground test tool (GTT) and a RAT system component. The securing includes inserting an adapter plate output spline into the RAT system component, receiving an output spline of the GTT in an adapter plate input spline and affixing opposite sides of the adapter plate to the GTT and the RAT system component, respectively. The method further includes running the GTT to drive rotations of the RAT system component and sensing a rotational speed of a shaft flange axially interposed between the adapter plate output and input splines.

In accordance with additional or alternative embodiments, the method further includes at least one of displaying the rotational speed at the adapter plate and transmitting or conveying the rotational speed to an external device.

In accordance with additional or alternative embodiments, the running of the GTT to drive the rotations of the RAT is executed in accordance with a schedule or other procedures.

In accordance with additional or alternative embodiments, the running of the GTT to drive the rotations of the RAT includes comparing the rotational speed to a target rotational speed and adjusting the rotational speed in accordance with a difference between the rotational speed and the target rotational speed.

These and other advantages and features will become more apparent from the following description taken in conjunction with the drawings.

### BRIEF DESCRIPTION OF THE DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a side view of a ground test tool (GTT) in accordance with embodiments;
FIG. 2 is a schematic illustration of an adapter plate interposed between the GTT of FIG. 1 and a RAT system component;
FIG. 3 is a perspective view in a first direction of the GTT and the adapter plate of FIGS. 1 and 2 affixed together;
FIG. 4 is a perspective view in a second direction of the GTT and the adapter plate of FIGS. 1 and 2 affixed together;
FIG. 5 is a perspective view of the adapter plate of FIGS. 2-4 in accordance with embodiments;
FIG. 6 is a cutaway side view of internal components of the adapter plate of FIG. 5;
FIG. 7 is a cutaway axial view of internal components of the adapter plate of FIG. 5; and
FIG. 8 is a flow diagram illustrating a method of conducting a ground test of a RAT system in accordance with embodiments.

These and other advantages and features will become more apparent from the following description taken in conjunction with the drawings.

### DETAILED DESCRIPTION

RAT systems of modern aircraft require periodic on-ground testing to verify that their mechanical, electromagnetic and electronic components will work as expected if the RAT system is needed in-flight. This testing normally involves attaching a ground test tool (GTT) hydraulic motor to the RAT's turbine axis and then using the GTT motor to backdrive the RAT such that the turbine rotates at the lower end of its governing speed range. The behavior of the RAT system and, in particular, its operating speed and speed control characteristics of the turbine's governor at different GTT input power levels and with different applied loads is used to assess whether the RAT system is operating properly.

As will be described below, an adapter plate with an integral speed sensor is interposed between a ground test motor and a RAT gearbox. The adapter plate allows turbine speed information to be obtained and displayed. The adapter plate and speed sensor assembly includes a housing with mounting flanges that mate with the existing interfaces on the ground test tool hydraulic motor and on the aft end of the RAT gearbox housing. The adapter plate has an internal splined shaft that is supported by bearings. This shaft has an internal input spline for interfacing with the ground test tool hydraulic motor output spline and an external output spline that interfaces with the RAT module turbine driveshaft spline. The speed sensor detects a rotational speed of the spline shaft by using an electromagnet tip or another similar feature to sense the passing of spoke features.

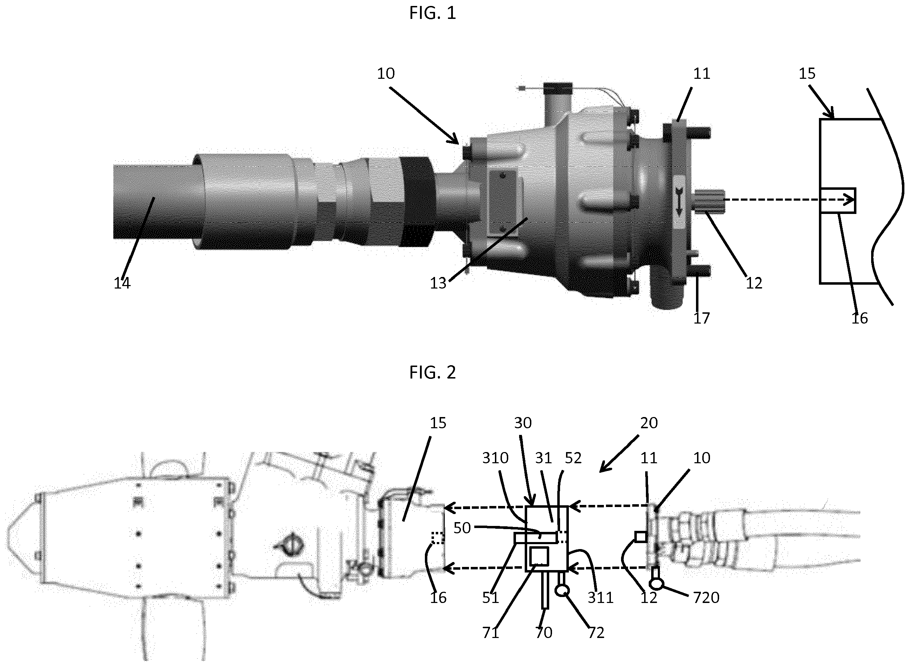

With reference to FIG. 1, a GTT 10 is provided and is normally configured for attachment to the turbine axis of a RAT module. The GTT 10 includes a mounting plate 11, a GTT spline 12 which protrudes from the mounting plate 11, a motor 13 which drives rotations of the GTT spline 12 and a power supply 14 coupled to the motor 13. The mounting plate 11 is configured to abut and be mounted to a complementary mounting plate of a RAT system component, such as a RAT gearbox 15, such that the GTT spline 12 registers with an input spline 16 of the RAT gearbox 15. In such cases, fastening elements 17 may be provided to secure the mounting plate 11 to the mounting plate of the RAT gearbox 15. The fastening elements 17 may include bolt-nut combinations or other similar features. In accordance with embodiments, the motor 13 may be a hydraulic motor and the power supply 14 may be provided in part as a system of hydraulic hoses attached to the motor 13.

To accurately assess whether the RAT system of a given aircraft is operating properly, it is necessary to know the rotational speed of the turbine during backdrive testing. However, since RAT systems normally do not have internal speed sensors and since modern aircraft might lack instrumentation to process or display RAT generator voltage frequency (which could otherwise be used to determine a rotational speed of the RAT system), it is possible that there is no way to measure, display, observe or make use of the turbine speed during a RAT system ground test on an aircraft besides the features disclosed herein.

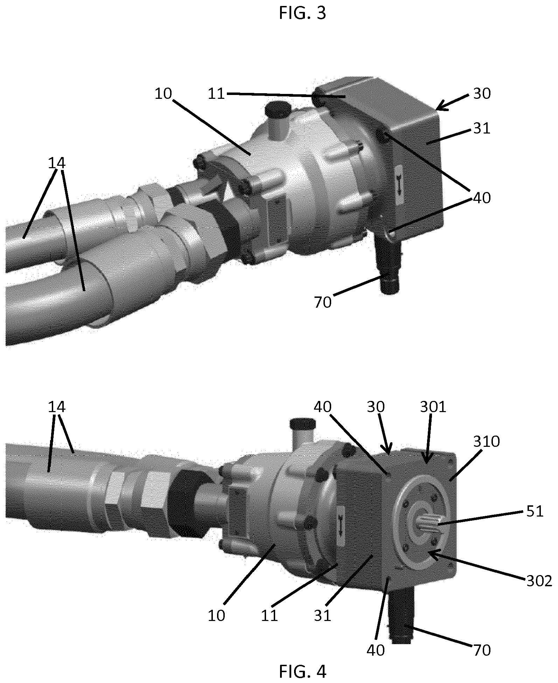

Thus, with reference to FIGS. 2-4, a GTT adapter plate and speed sensor assembly 20 is provided. The GTT adapter plate and speed sensor assembly 20 includes an adapter housing 30, mounting features 40, which are disposed in the adapter housing 30 to secure the adapter housing 30 between a RAT system component (e.g., the mounting plate of the RAT gearbox 15) and the mounting plate 11 of the GTT 10, a rotatable shaft 50, bearings 60 and a speed sensor 70.

The adapter housing 30 has a perimeter 301 and a central portion 302. The central portion 302 is generally defined within the perimeter 301. The adapter housing 30 includes a body 31. The body 31 has a first side 310 and a second side 311 that is disposed opposite the first side 310. The first side 310 is abuttable with the mounting plate of the RAT gearbox 15. The second side is abuttable with the mounting plate 11 of the GTT 10. The body 31 is also formed to define through-holes (not shown) which extend through the body 31 from the first side 310 to the second side 311. The mounting features 40 are extendable from the mounting plate of the RAT gearbox 15 and the first side 310, through the body 31 via the through-holes to and through the second side 311 and the mounting plate 11 of the GTT 10.

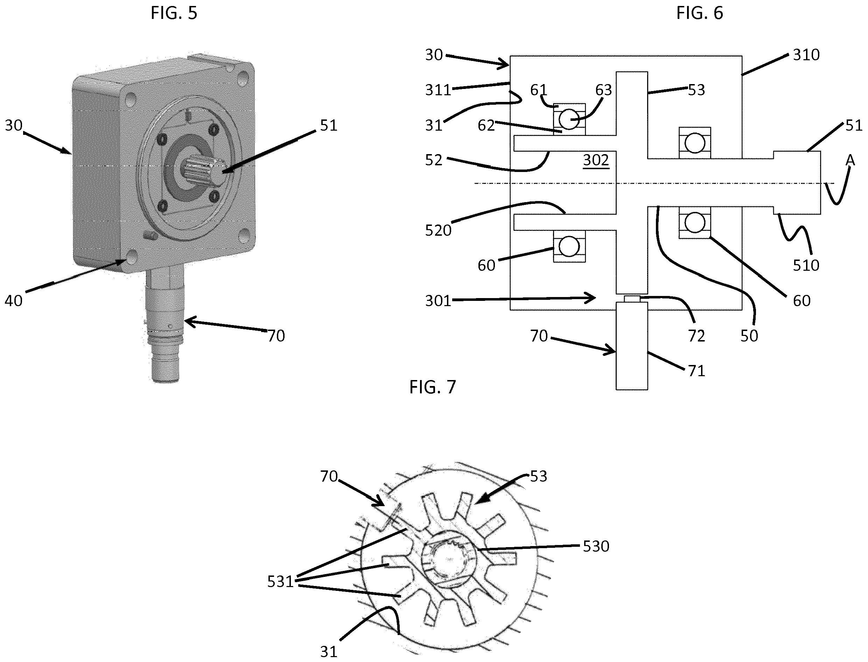

With continued reference to FIGS. 2-4 and with additional reference to FIGS. 5 and 6, the shaft 50 includes a first spline 51, a second spline 52 and a flange element 53. The first spline 51 protrudes from the first side 310 of the body 31 of the adapter housing 30 and includes or is provided as an output spline 510 which is registerable with the input spline 16 of the RAT gearbox 15 and corresponds to the GTT spline 12. The second spline 52 is recessed into the body 30 from the second side 311 and includes or is provided as an input spline 520 which is registerable with the GTT spline 12 and corresponds to the input spline 16 of the RAT gearbox 15. The flange element 53 is integrally and axially interposed between the first spline 51 and the second spline 52. Rotational energy input from the GTT 10 is transmittable to the RAT gearbox 15 along the first spline 51, the flange element 53 and the second spline 52.

With reference to FIG. 7 and, in accordance with embodiments, the flange element 53 may include or be provided with a hub 530 and a plurality of spokes 531 extending outwardly from the hub 530. Each one of the plurality of spokes 531 may extend radially outwardly beyond both the first spline 51 and the second spline 52. That is, from spoke-tip to spoke-tip, the flange element 53 may have a larger diameter than the first spline 51 and the second spline 52. Each of the plurality of the spokes 531 may extend to near the interior perimeter 301 of the adapter housing 30.

With reference back to FIG. 6, the bearings 60 are disposed to rotatably support the shaft 40 within an interior of the adapter housing 30 to rotate about rotational axis A. The rotational axis A extends through the shaft 50, the GTT spline 12 and the input spline 16. The bearings 60 may include one or more bearing elements operably disposed about the first spline 51 and one or more bearing elements operably disposed about the second spline 52. In accordance with embodiments and, as shown in FIG. 6, the bearings 60 may include a single bearing element for the first spline 51 and a single bearing element for the second spline 52. The single bearing element for the first spline 51 may include an outer race 61 which is affixed to the adapter housing 30, an inner race 62 which is affixed to the first spline 51 and rotational elements 63 radially interposed between the outer race 61 and the inner race 62. The single bearing element for the second spline 52 may have a similar structure.

The speed sensor 70 is coupled to the adapter housing 30 and is configured to measure a rotational speed of the shaft 50 from rotational energy driven rotations thereof. In accordance with embodiments and, as shown in FIG. 6, the speed sensor 70 may include a body 71, which is anchored to the body 31 of the adapter housing 30, and a sensing element 72. The sensing element 72 is disposable at the perimeter 301 of the adapter housing 30 such that the second element 72 is disposed to sense proximal passages of one or more of the plurality of spokes 531. Measurements of the rotational speed of the shaft 50 can be derived from the sensing of the proximal passages of the one or more of the plurality of spokes 531 by the sensing element 72. In accordance with embodiments, the sensing element 72 may include or be provided as one or more of an electromagnetic sensor, an optical sensor, a piezoelectric sensor, a Hall effect sensor, etc.

In accordance with alternative embodiments and, as shown in FIG. 2, the speed sensor 70 may include or be coupled to a local or remote display device 71 that is configured to display the rotational speed of the shaft 50. In either case, the speed sensor 70 may further include a wired or wireless transceiver 72 which is configured to transmit readings of the speed sensor 70 to an external device 720, such as a control component of the GTT 10. In addition, the GTT 10 may be operably controllable in an open-loop or closed-loop feedback system in accordance with at least one of a predefined schedule and readings of the rotational speed of the shaft 50 as generated by the speed sensor 70.

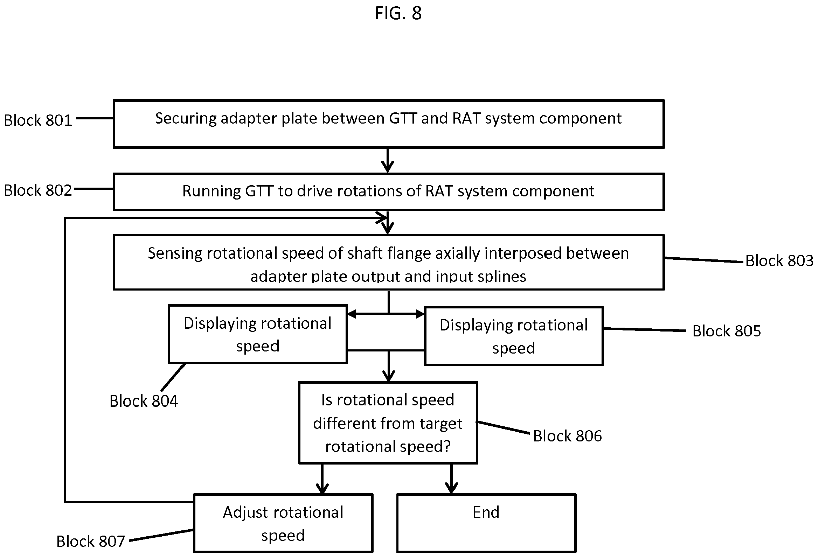

With reference to FIG. 8, a method of conducting a ground test of a RAT system is provided. As shown in FIG. 8, the method initially includes securing an adapter plate between a GTT and a RAT system component (block 801). The securing of block 801 includes inserting an adapter plate output spline into the RAT system component, receiving an output spline of the GTT in an adapter plate input spline and affixing opposite sides of the adapter plate to the GTT and the RAT system component, respectively. The method may further include running the GTT to drive rotations of the RAT system component (block 802) and sensing a rotational speed of a shaft flange axially interposed between the adapter plate output and input splines (block 803).

In accordance with embodiments, the method may further include at least one of displaying the rotational speed at or remote from the adapter plate (block 804) and transmitting the rotational speed to an external device (block 805). In accordance with further embodiments, the running of the GTT to drive the rotations of the RAT of block 802 may be executed in accordance with a schedule or, as an additional or alternative embodiment, by comparing the rotational speed to a target rotational speed (block 806) and adjusting the rotational speed in accordance with a difference between the rotational speed and the target rotational speed (block 807).

The adapter plate with the speed sensor disclosed herein allows turbine speed to be obtained and displayed without modifying existing RAT system equipment or aircraft instrumentation. This avoids significant expense and schedule impact at the RAT level and the aircraft level. It also avoids adverse RAT system operational issues that could occur when tapping into the RAT generator permanent magnet generator (PMG) output to read its frequency.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A speed sensing adapter plate, comprising:
an adapter housing (30) having a perimeter (301) and a central portion (302) defined within the perimeter and comprising a body (31) having first and second opposite sides;
mounting features (40) disposed in the perimeter (301) of the adapter housing (30) to extend from the first side to the second side;
a shaft (50) disposed in the central portion of the adapter housing (30) and comprising first and second splines at the first and second sides, respectively, and a flange (53) axially interposed between the first (51) and second (52) splines such that input rotational energy is transmittable from the first spline (51) to the second spline (52) via the flange (53);
bearings (60) disposed to rotatably support the shaft (50) within the adapter housing (30); and
a speed sensor (70) coupled to the perimeter of the adapter housing (30) and configured to measure a rotational speed of the shaft (50) from rotational energy driven rotations of the flange (53).

2. The speed sensing adapter plate according to claim 1, wherein:
the first spline (51) comprises an output spline which protrudes from the first side, and
the second spline (52) comprises an input spline which is recessed from the second side.

3. The speed sensing adapter plate according to claim 1 or 2, wherein the flange extends radially outwardly beyond the first (51) and second (52) splines to near an interior perimeter of the adapter housing (30).

4. The speed sensing adapter plate according to claim 1 or 2, wherein the flange (53) comprises a hub (530) and spokes (531) extending radially outwardly from the hub (530).

5. The speed sensing adapter plate according to claim 4, wherein the speed sensor (70) comprises a sensing element configured to sense proximal passages of one or more of the spokes (531).

6. The speed sensing adapter plate according to any preceding claim, wherein the speed sensor (70) is coupled to a display device configured to display the rotational speed of the shaft (50).

7. The speed sensing adapter plate according to any preceding claim, further comprising a wireless transceiver configured to transmit readings of the speed sensor (70) to an external device.

8. A ground test tool (GTT) adapter plate and speed sensor assembly, comprising:
an adapter housing (30);
mounting features (40) disposed in the adapter housing (30) to secure the adapter housing between a RAT system component and the GTT;
a shaft (50) comprising first (51) and second (52) splines to register with complementary splines of the RAT system component and the GTT such that rotational energy input from the GTT is transmittable to the RAT system component along the shaft (50);
bearings (60) disposed to rotatably support the shaft (50) within the adapter housing (30); and
a speed sensor (70) coupled to the adapter housing (30) and configured to measure a rotational speed of the shaft (50) from rotational energy driven rotations thereof.

9. The GTT adapter plate and speed sensor assembly according to claim 8, wherein the adapter housing comprises:
a body having a first side abuttable with the GTT; and
a second side opposite the first side and abuttable with the RAT system component,
wherein the mounting features (40) are extendable from the first side and through the adapter housing (30) to the second side.

10. The GTT adapter plate and speed sensor assembly according to claim 8 or 9, wherein:
the first spline (51) protrudes from a first side of the adapter housing (30), and
the second spline (52) is recessed from a second side of the adapter housing (30).

11. The GTT adapter plate and speed sensor assembly according to claim 8 9 or 10, wherein:
the first spline (51) comprises an output spline which is registerable with a spline of the RAT system component and corresponds to a spline of the GTT, and
the second spline (52) comprises an input spline which is registerable with the spline of the GTT and corresponds to the spline of the RAT system component.

12. The GTT adapter plate and speed sensor assembly according to claim 8, 9 or 10, wherein:
the shaft (50) further comprises a flange (53) axially interposed between the first (51) and second (52) splines, and
the flange (53) extends radially outwardly beyond the first (51) and second (52) splines to a perimeter of the adapter housing (30).

13. The GTT adapter plate and speed sensor assembly according to claim 12, wherein:
the flange (53) comprises a hub (530) and spokes (531) extending radially outwardly from the hub (530), and
the speed sensor comprises a sensing element configured to sense proximal passages of one or more of the spokes (531).

14. The GTT adapter plate and speed sensor assembly according to any of claims 8 to 13, wherein the speed sensor is coupled to a display device configured to display the rotational speed of the shaft (50).

15. The GTT adapter plate and speed sensor assembly according to any of claims 8 to 14, further comprising a wireless transceiver configured to transmit readings of the speed sensor (70) to an external device.
